# EUROPEAN PATENT APPLICATION

(11) **EP 3 086 269 A1**
(43) Date of publication of application: **26.10.2016**
(21) Application number: 15305608.0
(22) Date of filing: 22.04.2015
(51) Int. Cl.: G06Q 10/10, G06Q 30/00

(54) **DEVICE AND METHOD FOR CONTROLLING DIRECT ACCESS OF A COMMUNICATION EQUIPMENT TO A VIRTUAL STORE OF A NETWORK OPERATOR**

(71) Applicant: GEMALTO SA, 92190 Meudon (FR)
(72) Inventor: Merrien, Lionel, 92190 Meudon (FR); Rhelimi, Alain, 92190 Meudon (FR)
(74) Representative: Delaval, Guillaume Laurent

(57) **Abstract**

A device (1) is intended for controlling access of a communication equipment (2) of a user to virtual stores **(3₁₁-3₂₁)** of network operators accessible into servers **(4₁-4₂).** This device (1) comprises a control means (6) arranged, when this user provides its communication equipment (2) with an access code associated to a virtual store (3₁₁) of a network operator, for determining a communication identifier of a virtual store page (7₁₁ₙ) corresponding to this access code and to data defining a context of the communication equipment (2) into a table establishing correspondences between access codes and communication identifiers of pages of virtual stores providing offers corresponding to communication equipment contexts, then for triggering access by the communication equipment (2) to the virtual store page (7₁₁ₙ) associated to the determined communication identifier to allow the user to select an offer contained into this virtual store page (7₁₁ₙ).

## Description

### Technical field

The present invention relates to communication equipments of users, and more precisely to the access of communication equipments to virtual stores of network operators.

### Background of the invention

When someone purchases a new communication equipment comprising an embedded smart card (or embedded UICC ("Universal Integrated Circuit Card")) that has never been customized (and is sometimes called "vanilla device"), he needs to activate his communication equipment on one of the networks available on the market. To realize such an activation the communication equipment must access directly to a virtual store of a communication network operator to allow its user to select an offer (or subscription) contained into a virtual store page, and then to activate the selected offer. This type of activation is commonly referred as "on-device activation".

There are three known solutions to realize this type of activation.

A first solution consists in directly access a selected virtual store of the network operator by entering the URL ("Universal Resource Locator") of the concerned Internet site directly in the browser of the communication equipment. This solution has at least two drawbacks. Indeed, the user needs to know this URL and has to properly navigate through the Internet site in order to find the page describing the interesting offers, and the user needs to provide additional information about his communication equipment to proceed to the offer purchasing and then to the offer activation, and/or the concerned network operator may need to gather this additional information through the communication network.

A second solution consists in directing automatically the communication equipment of a user to a central virtual store that provides all the offers of several network operators based on some parameters provided by this communication equipment (and notably its model and its geographical location). This is typically done by means of an "activation application" that is loaded on the communication equipment. The issue with such a solution is that this central virtual store becomes a point of disintermediation between the network operators and the user.

A third solution consists in using an "activation application" that is loaded on the communication equipment to send some parameters (and notably its model and its geographical location) to a central repository (or distribution hub), which in return provides a list of addresses and names and/or logos of virtual stores corresponding to these parameters. The main issue with such a solution is that the list provided by the central repository can heavily influence the user in his choice of network operator, without even comparing the different offers. Moreover, the order of names and/or logos in the list may be considered as marketing tool, and therefore be subject to negotiations. In turn this would give to the central repository a specific "control" status over the different virtual stores.

### Summary of the invention

So, an objective of the invention is to improve the situation without using a central list service consolidating multiple offers from multiple service providers.

To this effect the invention provides notably a device, intended for controlling access of a communication equipment of a user to virtual stores of network operators accessible into servers, and comprising a control means arranged, when this user provides its communication equipment with an access code associated to a virtual store of a network operator:
- for determining a communication identifier of a virtual store page corresponding to this access code and to data defining a context of the communication equipment into a table establishing correspondences between access codes and communication identifiers of pages of virtual stores providing offers corresponding to communication equipment contexts, then
- for triggering access by the communication equipment to the virtual store page associated to this determined communication identifier to allow the user to select an offer contained into this virtual store page.

The device according to the invention may include additional characteristics considered separately or combined, and notably:
- its control means may be arranged for triggering transmission by the communication equipment of the access code and context data to a predefined server comprising the table of correspondences, in order to determine the communication identifier corresponding to these access code and context data;
- its control means may be arranged, after having triggered the access to the virtual store page, for triggering transmission by the communication equipment to the virtual store comprising this page of at least one authentication element associated to the communication equipment, in order to ease activation of the selected offer into the latter;
- in a variant, its control means may be arranged, when it triggers the access to the virtual store page, for further triggering transmission by the communication equipment to the virtual store comprising this page of at least one authentication element associated to this communication equipment, in order to ease activation of the selected offer into the latter;
- the context data may define at least one information chosen from a group comprising at least a current geographical location of the communication equipment, an identifier representative of the model of the communication equipment, habit(s) of the user in terms of network access, and information allowing some identification of the user;
- the access code may be chosen from a group comprising at least a name of a network operator, an alphanumeric identifier, and a promotion name.

The invention also provides a server, intended for being connected to a communication network, and comprising:
- a storing means arranged for storing a table establishing correspondences between access codes and communication identifiers of pages of virtual stores of network operators accessible into servers and providing offers corresponding to contexts of communication equipments, and
- a searching means arranged, when it receives an access code and context data from a communication equipment, for searching a corresponding communication identifier of a virtual store page into this table of correspondences, and for triggering transmission of the searched communication identifier to this communication equipment.

The invention also provides a method, intended for controlling access of a communication equipment of a user to virtual stores of network operators accessible into servers, and comprising:
- a first step during which this user provides its communication equipment with an access code associated to a virtual store of a network operator, then this communication equipment determines a communication identifier of a virtual store page corresponding to this access code and to data defining a communication equipment context into a table establishing correspondences between access codes and communication identifiers of pages of virtual stores providing offers corresponding to communication equipment contexts, and
- a second step during which the communication equipment accesses to the virtual store page associated to this determined communication identifier to allow the user to select an offer contained into this virtual store page.

For instance, in the first step the communication equipment may transmit the access code and context data to a predefined server comprising the table of correspondences in order to determine the communication identifier corresponding to the access code and context data.

### Brief description of the figures

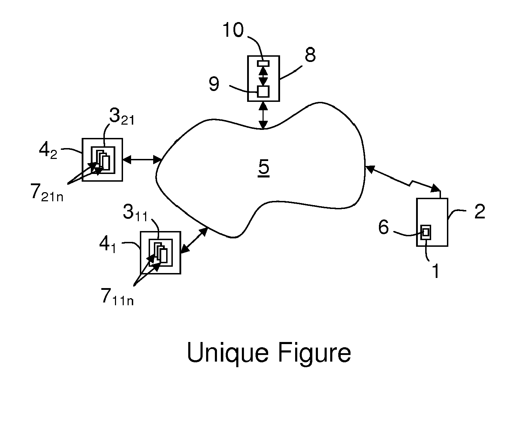

Other features and advantages of the invention will become apparent on examining the detailed specifications hereafter and the appended drawing, wherein the unique figure schematically and functionally illustrates a communication network to which are coupled two servers of virtual store pages, a server of information according to the invention and a communication equipment comprising a control device according to the invention.

### Detailed description of the preferred embodiment

The appended drawing may serve not only to complete the invention, but also to contribute to its definition, if need be.

The invention aims, notably, at offering a device 1 intended for controlling access of a communication equipment 2 of a user to virtual stores 3ⱼₖ of network operators accessible into servers 4ⱼ connected to at least one communication network 5.

In the following description it will be considered, as an example, that the communication equipment 2 is a smart phone. But the invention is not limited to this type of communication equipment. It concerns any communication equipment (wireless or wired), and notably electronic tablets, smart watches, laptops, personal computers and game consoles, any connected device that would require a wireless subscription to be purchased by its user, it being cellular or WiFi or any other wireless technology, and any wearable device having a direct or indirect user's interface (e.g keyboard or touchscreen).

In the non-limiting example illustrated in the unique figure, two servers 4ⱼ of virtual store pages 7ⱼₖₙ, a server of information 8 according to the invention and a communication equipment 2 comprising a control device 1 according to the invention are connected to a communication network 5.

In the described example, the communication equipment 2 being a smart phone, the communication network 5 comprises a wireless communication infrastructure, allowing connection of wireless communication equipments 2 of subscribers (or users), and a wired communication infrastructure (preferably with Internet access), allowing connection of, or access to, network equipments such as the page servers 4ⱼ and the information server 8.

In the non-limiting example illustrated in the unique figure each page server 4ⱼ (j = 1 or 2) is dedicated to a single virtual store 3ⱼₖ (k = 1) of a network operator. But a page server 4ⱼ could be dedicated to several (at least two) virtual stores 3ⱼₖ (k = 1 a K, with K >1) of one or several network operators. So, the number of page servers 4ⱼ connected to the communication network 5 is at least equal to one (1).

Each virtual store 3ⱼₖ defines, for instance, an Internet site associated to an access code and to a communication identifier (allowing access to it when it is entered by a communication equipment). For instance, a communication identifier may be a URL ("Universal Resource Locator" - a range of IP addresses where each access code is added to the base of the IP range). Also for instance, an access code may be a name of a network operator, an alphanumeric identifier, a promotion name, or a GPS location (gathered by the communication equipment 2) of the place where the user may see a particular advertising. The access codes may be, for instance, marketed by the network operators through classical advertising channels.

Moreover, each virtual store 3ⱼₖ comprises one or more pages 7ⱼₖₙ (n = 1 to N, with n ≥ 1) that each provide one or more offers corresponding respectively to different communication equipment contexts. For instance, an offer may be a subscription to a cell phone plan (or package).

For instance, a context data may define at least one information that may be a current geographical location of the communication equipment 2 (for instance provided by a GPS application), an identifier representative of the model of the communication equipment 2, habit(s) of the communication equipment user in terms of network access, and information allowing some identification of the user himself, for instance as an existing customer.

A control device 1, according to the invention, is intended for intervening each time the user of a communication equipment 2 wants to access to a chosen virtual store 3ⱼₖ of a network operator. As illustrated, such a (control) device 1 comprises a control means 6 arranged, when the user provides his communication equipment 2 with an access code associated to a virtual store 3ⱼₖ of a network operator, for determining a communication identifier of a virtual store page 7ⱼₖₙ corresponding to this access code and to data defining a context of this communication equipment 2 into a table establishing correspondences between access codes and communication identifiers of pages 7ⱼₖₙ of virtual stores 3ⱼₖ. The control means 6 is further arranged, once this communication identifier is determined, for triggering access by its communication equipment 2 directly to the virtual store page 7ⱼₖₙ that is associated to this determined communication identifier to allow his user to select an offer contained into this virtual store page 7ⱼₖₙ.

The device 1 (and notably its control means 6) is preferably made of a combination of electronic circuit(s) (or hardware modules) and software modules. In this case the device 1 comprises also a software interface allowing interworking between the hardware and software modules. But the device 1 could be also made only of software modules.

As illustrated in the non-limiting example of the unique figure, the control means 6 may be arranged for triggering transmission by its communication equipment 2 of the access code and context data to a predefined information server 8 that comprises the table of correspondences to determine the communication identifier corresponding to the access code and context data provided by the user.

The transmission of the access code and context data is performed by means of a request comprising, for instance, the following structure "CODE.vstore.gsma.com?geo = location; model = XYZ" or "vstore.gsma.com?code = CODE; geo = location; model = XYZ, where "CODE" is the access code of the chosen virtual store and "model" designates the model of the communication equipment 2.

In this embodiment, the information server 8 needs to comprise a storing means 9 and a searching means 10.

The storing means 9 is arranged for storing the table establishing correspondences between access codes and communication identifiers of virtual store pages 7ⱼₖₙ, accessible into the servers 4ⱼ and providing offers corresponding to contexts of communication equipments. This storing means 9 may be a memory, possibly of a software type, and possibly arranged in the form of a database. It may store some features defining the capability of each model of communication equipment and its embedded UICC.

The searching means 10 is arranged, when it receives an access code and context data from a communication equipment 2, for searching a corresponding communication identifier of a virtual store page 7ⱼₖₙ into the table of correspondences, and for triggering transmission of this searched communication identifier to this communication equipment 2. So, the information server 8 acts as a smart DNS ("Domain Name System") server.

This searching means 10 is preferably made of software modules. But it could be also made of a combination of electronic circuit(s) (or hardware modules) and software modules. In the last case the information server 8 comprises also a software interface allowing interworking between the hardware and software modules or components.

In a variant of embodiment not illustrated, the table of correspondences could be stored into a memory means of the device 1, possibly of the software type, and accessible to the control means 6.

It is important to note that the control means 6 may be further arranged, after having triggered the direct access to a virtual store page 7ⱼₖₙ, for also triggering transmission by its communication equipment 2, to the virtual store 3ⱼₖ comprising this page 7ⱼₖₙ, of at least one authentication element associated to this communication equipment 2, in order to ease activation of the selected offer into the latter (2). So, the device 1 acts as an activation application.

In a variant of embodiment, the control means 6 may be further arranged, when it triggers the direct access to a virtual store page 7ⱼₖₙ, for further triggering transmission by its communication equipment 2, to the virtual store 3ⱼₖ comprising this page 7ⱼₖₙ, of at least one authentication element associated to this communication equipment 2, in order to ease activation of the selected offer into the latter (2). So, the device 1 acts also as an activation application.

The invention can also be considered in terms of a method intended for controlling access of a communication equipment 2 of a user to virtual stores 3ⱼₖ of network operators accessible into servers 4ⱼ.

Such a method may be implemented by means of a device 1, and possibly the information server 8, such as the ones above described with reference to the unique figure. Therefore, only its main characteristics will be mentioned hereafter.

The method according to the invention comprises:
- a first step during which the user provides his communication equipment 2 with an access code associated to a virtual store 3ⱼₖ of a network operator, then his communication equipment 2 determines a communication identifier of a virtual store page 7ⱼₖₙ corresponding to this access code and to data defining a communication equipment context into a table establishing correspondences between access codes and communication identifiers of pages 7ⱼₖₙ of virtual stores 3ⱼₖ providing offers corresponding to communication equipment contexts, and
- a second step during which the communication equipment 2 accesses to this virtual store page 7ⱼₖₙ associated to the determined communication identifier to allow his user to select an offer contained into this virtual store page 7ⱼₖₙ.

During this first step the communication equipment 2 may transmit the access code and context data to a predefined server 8 that comprises the table of correspondences to determine the communication identifier corresponding to the access code and context data provided by the user.

The invention offers several advantages, and notably:
- the user experience is streamlined, because the virtual store chosen by the user can present a list of offers that exactly matches the user context, and therefore the user does not have to navigate through an entire virtual store of a network operator, and no additional data needs to be gathered, either from the user or from the communication network,
- there is no more central store acting as a point of disintermediation between the user and the network operator,
- it allows network operators to rely on existing marketing tools to promote their virtual stores.

The invention is not limited to the embodiments of device, server and method described above, only as examples, but it encompasses all alternative embodiments which may be considered by one skilled in the art within the scope of the claims hereafter.

## Claims

1. Device (1) for controlling access of a communication equipment (2) of a user to virtual stores (3ⱼₖ) of network operators accessible into servers (4ⱼ), **characterized in that** it comprises a control means (6) arranged, when said user provides said communication equipment (2) with an access code associated to a virtual store (3ⱼₖ) of a network operator, for determining a communication identifier of a virtual store page (7ⱼₖₙ) corresponding to said access code and to data defining a context of said communication equipment (2) into a table establishing correspondences between access codes and communication identifiers of pages (7ⱼₖₙ) of virtual stores (3ⱼₖ) providing offers corresponding to communication equipment contexts, then for triggering access by said communication equipment (2) to said virtual store page (7ⱼₖₙ) associated to said determined communication identifier to allow said user to select an offer contained into said virtual store page (7ⱼₖₙ).

2. Device according to claim 1, **characterized in that** said control means (6) is arranged for triggering transmission by said communication equipment (2) of said access code and context data to a predefined server (8) comprising said table of correspondences to determine said communication identifier corresponding to said access code and context data.

3. Device according to one of claims 1 and 2, **characterized in that** said control means (6) is arranged, after having triggered said access to said virtual store page (7ⱼₖₙ), for triggering transmission by said communication equipment (2) to the virtual store (3ⱼₖ) comprising said page (7ⱼₖₙ) of at least one authentication element associated to said communication equipment (2), in order to ease activation of said selected offer into the latter (2).

4. Device according to one of claims 1 and 2, **characterized in that** said control means (6) is arranged, when it triggers said access to said virtual store page (7ⱼₖₙ), for further triggering transmission by said communication equipment (2) to the virtual store (3ⱼₖ) comprising said page (7ⱼₖₙ) of at least one authentication element associated to said communication equipment (2), in order to ease activation of said selected offer into the latter (2).

5. Device according to one of claims 1 to 4, **characterized in that** said context data define at least one information chosen from a group comprising a current geographical location of said communication equipment (2), an identifier representative of the model of said communication equipment (2), habit(s) of said user in terms of network access, and information allowing some identification of said user.

6. Device according to one of claims 1 to 5, **characterized in that** said access code is chosen from a group comprising a name of a network operator, an alphanumeric identifier, and a promotion name.

7. Server (8) intended for being connected to a communication network, **characterized in that** it comprises i) a storing means (9) arranged for storing a table establishing correspondences between access codes and communication identifiers of pages (7ⱼₖₙ) of virtual stores (3ⱼₖ) of network operators accessible into servers (4ⱼ) and providing offers corresponding to contexts of communication equipments, and ii) a searching means (10) arranged, when it receives an access code and context data from a communication equipment (2), for searching a corresponding communication identifier of a virtual store page (7ⱼₖₙ) into said table of correspondences, and for triggering transmission of said searched communication identifier to said communication equipment (2).

8. Method for controlling access of a communication equipment (2) of a user to virtual stores (3ⱼₖ) of network operators accessible into servers (4ⱼ), **characterized in that** it comprises a first step during which said user provides said communication equipment (2) with an access code associated to a virtual store (3ⱼₖ) of a network operator, then said communication equipment (2) determines a communication identifier of a virtual store page (7ⱼₖₙ) corresponding to said access code and to data defining a communication equipment context into a table establishing correspondences between access codes and communication identifiers of pages (7ⱼₖₙ) of virtual stores (3ⱼₖ) providing offers corresponding to communication equipment contexts, and a second step during which said communication equipment (2) accesses to said virtual store page (7ⱼₖₙ) associated to said determined communication identifier to allow said user to select an offer contained into said virtual store page (7ⱼₖₙ).

9. Method according to claim 8, **characterized in that** in said first step said communication equipment (2) transmits said access code and context data to a predefined server (8) comprising said table of correspondences to determine said communication identifier corresponding to said access code and context data.
